(19) Europäisches Patentamt
European Patent Office
Office européen des brevets

(11) **EP 4 399 493 B1**

(12) **FASCICULE DE BREVET EUROPÉEN**

(45) Date de publication et mention
de la délivrance du brevet:
**20.05.2026 Bulletin 2026/21**

(21) Numéro de dépôt: **22735422.2**

(22) Date de dépôt: **27.06.2022**

(51) Classification Internationale des Brevets (IPC):
**G01F 1/36** *(2006.01)*    **G01F 1/48** *(2006.01)*
**B01L 3/00** *(2006.01)*

(52) Classification Coopérative des Brevets (CPC):
**G01F 1/363; B01L 3/502715; G01F 1/48;**
B01L 2200/146; B01L 2300/0663; B01L 2400/082

(86) Numéro de dépôt international:
**PCT/EP2022/067493**

(87) Numéro de publication internationale:
**WO 2023/036482 (16.03.2023 Gazette 2023/11)**

(54) **SYSTÈME DE MESURE DE DÉBIT DE LIQUIDE DANS UNE CANALISATION MICRO-FLUIDIQUE**

SYSTEM ZUR MESSUNG DER DURCHFLUSSRATE EINER FLÜSSIGKEIT IN EINEM MIKROFLUIDISCHEN ROHR

SYSTEM FOR MEASURING THE FLOW RATE OF LIQUID IN A MICROFLUIDIC PIPE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.09.2021 FR 2109401**

(43) Date de publication de la demande:
**17.07.2024 Bulletin 2024/29**

(73) Titulaire: **MICROFLUIDICS INNOVATION CENTER
75011 Paris (FR)**

(72) Inventeurs:
• **PLECIS, Adrien
92340 BOURG-LA-REINE (FR)**
• **MCMILLAN, Alexander
75010 PARIS (FR)**
• **VELVE-CASQUILLAS, Guilhem
75019 PARIS (FR)**
• **FARIN, Eric
94120 FONTENAY-SOUS-BOIS (FR)**

(74) Mandataire: **Marconnet, Sébastien
Cabinet Sébastien Marconnet
1 Quinquies rue Basse de la Terrasse
(Bâtiment A)
92190 Meudon (FR)**

(56) Documents cités:
EP-A1- 3 030 877    US-A1- 2005 054 111
US-A1- 2014 208 833    US-A1- 2019 025 100

**Description**

La présente invention concerne un système de mesure de débit de liquide dans une canalisation micro fluidique. Elle concerne également un procédé de mesure de débit dans une canalisation micro fluidique ainsi que l'utilisation d'un tel système pour la réalisation d'un générateur de débit micro fluidique à l'aide duquel on peut contrôler le débit de liquide dans cette canalisation.

De nombreux systèmes de mesure de débit d'un liquide dans une canalisation micro fluidique (dans laquelle le débit de liquide est typiquement compris entre 1 μL/min et 5 ml/min) ont été décrits dans la littérature. L'article intitulé « micromachined flow sensors-a review » de N.T. Nguyen publié dans la revue FLOW MEASUREMENT AND INSTRUMENTATION-MARCH 1997, décrit différentes méthodes de mesure du débit d'un liquide dans la gamme des débits micro fluidiques, c'est-à-dire les débits de liquide inférieurs à 100 ml/min, et typiquement compris entre 1μL/min et 1 ml/min pour la majorité des applications. Les méthodes les plus courantes sont basées sur l'utilisation de capteurs thermiques faisant usage de la mesure du déplacement d'un flux thermique transporté par le mouvement du liquide.

Il est également connu d'utiliser des capteurs vibrants basés sur la force de Coriolis pour réaliser des mesures de débit de fluides tels que ceux commercialisés sous la dénomination Cori-FLOW par la société Bronkhorst.

La demande de brevet WO2017/125499 déposée au nom de la société ELVESYS décrit un système de mesure de débit utilisant une mesure de pression d'un gaz d'une part et une mesure de pression d'un liquide d'autre part.

Il est également connu, par exemple des brevets US5515735, US8403908 ou WO9740350, d'utiliser deux capteurs de pression liquide disposés de part et d'autre d'une canalisation micro fluidique ou d'une restriction, mesurant la perte de charge du liquide dans la canalisation micro fluidique ou la restriction. De cette mesure de différence de pression, on peut en déduire aisément le débit D d'un liquide newtonien incompressible à travers la canalisation micro fluidique ou la restriction à l'aide de la formule :

$$D = (P1 - P2)/Rh$$

P1 étant la pression du liquide en amont de la canalisation ou restriction, P2 étant la pression du liquide en aval de la canalisation ou restriction et Rh la résistance hydraulique de la canalisation ou de la restriction entre les deux points de mesure de pression amont et aval du liquide. La résistance hydraulique est mesurée pour l'eau à température de 20°C. Dans le cas d'autres fluides, on peut déduire une résistance hydraulique équivalente grâce au rapport des viscosités dynamique du liquide introduit dans la canalisation à la viscosité de l'eau à 20°C. La résistance hydraulique peut être soit déduite de la géométrie de la canalisation dans le cas des canalisations simples (section cylindrique), soit calibrée à l'aide d'un générateur de débit (par exemple un pousse seringue) et en mesurant la chute de pression de part et d'autre de la canalisation à débit constant imposé. US2014/208833-A1 décrit un capteur de débit, en particulier à usage unique, comportant au moins trois chambres de mesure disposées l'une derrière l'autre et reliées chacune par une résistance à l'écoulement. Au moins deux des résistances à l'écoulement ont un coefficient de perte de charge différent.

Dans ces systèmes, et compte tenu que la résistance hydraulique soit connue, la mesure de débit est ainsi calculée à l'aide par exemple d'un ordinateur spécialement configuré auquel sont transmises les valeurs mesurées de P1, P2, la valeur connue ou calibrée de Rh et qui délivre un signal électrique proportionnel à D.

Tous les systèmes de mesure de débit dans une canalisation micro fluidique actuellement connus, quel que soit leur principe de fonctionnement, sont confrontés au problème de bouchage dû à l'encrassement des canalisations micro fluidiques et du blocage de l'écoulement du liquide. L'encrassement (c'est-à-dire le dépôt de matière ou de débris à l'intérieur de la voie d'écoulement du liquide) peut compromettre la précision ou la fonctionnalité du système en modifiant la dynamique d'écoulement et donc la résistance hydraulique de la conduite dans les cas des systèmes de mesure de débit par pression différentielle ou la dynamique de propagation thermique dans le cas des capteurs de débit thermique. Bien que certaines précautions et/ou protocoles de nettoyage puissent résoudre plus ou moins bien ce problème, l'existence d'un encrassement d'une canalisation micro fluidique peut s'avérer difficile à mettre en évidence et peut ainsi entraîner des mesures erronées du débit à l'insu de l'utilisateur notamment lors d'expérimentations ou d'utilisations longues pendant lesquelles les procédures de nettoyages ne peuvent pas être appliquées. En outre, et malgré l'application des procédures de nettoyages, certains capteurs ne sont plus en mesure de proposer une valeur de mesure valable car l'encrassement a définitivement modifié la dynamique du capteur et ces derniers deviennent de facto inutilisables.

L'invention permet de résoudre le problème d'encrassement de canalisations et restrictions micro fluidiques dans les systèmes de mesure de débit de liquide amenant à des mesures erronées à l'insu de l'utilisateur en proposant un système de mesure de débit à même de mesurer l'effet de cet encrassement.

L'invention vise également à proposer un système de mesure de débit capable d'alerter l'utilisateur lors de la survenue d'un bouchage progressif et de proposer une mesure de débit fiable malgré un encrassement partiel du capteur de débit. L'invention propose enfin d'être robuste aux encrassements homogènes particulièrement difficiles à détecter et de permettre l'utilisation de systèmes de mesure analogiques ou encore le contrôle du débit à l'aide d'un générateur de pression.

A cet effet, l'invention a pour objet un système de mesure de débit dans une canalisation micro fluidique d'après la revendication 1, comportant n capteurs de pression Ci (C1, C2, ..., Cn), avec n supérieur ou égal à 3, disposés en série sur la canalisation et mesurant la pression du liquide les traversant, ces capteurs étant séparés entre eux par n-1 portions de canalisation Ri (R1, R2, ..., Rn-1) présentant chacune une résistance hydraulique Rhi (Rh1, Rh2, ..., Rhn-1), les capteurs de pression mesurant la pression Pi (P1, P2, ..., Pn) du liquide les traversant respectivement, ainsi qu'un ordinateur (10) spécialement configuré pour :

- mesurer les variations de pression ou pertes de charge $\Delta$Pi ($\Delta$P1, $\Delta$P2, ..., $\Delta$Pn-1) entre deux capteurs de pression Ci et Ci+1 successifs,
- calculer le débit de liquide Di (D1, D2, ..., Dn-1) dans la portion de canalisation Ri, et
- calculer la différence proportionnelle de débit $\Delta$Dk,j entre deux valeurs Dk et Dj parmi les valeurs de débit Di.

Selon une réalisation de l'invention, l'ordinateur spécialement configuré est apte à calculer la moyenne des débits Dmoyen des valeurs de débits Di.

Selon l'invention, l'ordinateur comprend des moyens de détections de bouchage pour engendrer un signal d'alerte lorsqu'une différence proportionnelle $\Delta$Dk,j entre deux quelconques valeurs Dk et Dj parmi l'ensemble des valeurs Di est supérieure à une valeur de seuil $\Delta$Dseuil, ce signal indiquant un bouchage partiel et / ou un encrassement de la canalisation micro fluidique.

Selon une réalisation de l'invention, l'ordinateur spécialement configuré est apte à calculer la moyenne de débits Dmoyen sur le plus grand ensemble des Di tel que deux quelconques débits Dj et Dk de cet ensemble présentent une différence proportionnelle de débit $\Delta$Dk,j inférieure à $\Delta$Dseuil.

Selon une réalisation de l'invention, au moins une des portions de canalisation Ri a un diamètre hydraulique différent de celui des autres portions de canalisations.

Selon une réalisation de l'invention, deux portions de canalisation Ri présentent un rapport de diamètre hydraulique supérieur ou égal à 2.

L'invention a également pour objet un procédé pour mesurer le bouchage d'une canalisation micro fluidique d'après la revendication 6, consistant à faire circuler le fluide au travers de n-1 (n supérieure ou égale à 3) portions de canalisation micro fluidiques Ri, disposées en série présentant chacune une résistance hydraulique (Rhi, respectivement), un capteur de pression Ci étant disposé respectivement aux deux extrémités de chaque portion de canalisation micro fluidique configurées en série de manière à mesurer les variations de pression $\Delta$Pi entre les deux capteurs de pression disposés aux deux extrémités de la i-ème portion de canalisation micro fluidique Ri et ensuite calculer le débit Di dans chaque portion de canalisation selon la relation :

$$Di = \Delta Pi/Rhi$$

ainsi que les différences proportionnelles de débit $\Delta$Dk,j, selon la relation :

$$\Delta Dk, j = |Dk - Dj|/((Dk + Dj)/2)$$

ledit procédé étant en mesure de calculer la valeur moyenne des débits Dmoyen selon la relation :

$$Dmoyen = \sum(Di)/(n-1)$$

Par exemple, $\Delta$P1 entre le premier capteur C1 et le deuxième capteur C2 donne D1 en connaissant la résistance hydraulique Rh1 de la première portion de canalisation R1, et $\Delta$P2 entre le deuxième capteur C2 et le troisième capteur C3 de pression donne D2 en connaissant la résistance hydraulique Rh2 de la deuxième portion de canalisation R2, la comparaison des différentes valeurs de Di permettant de déterminer l'encrassement ou le bouchage de la canalisation.

Selon l'invention, la différence proportionnelle $\Delta$Dk,j entre deux quelconques valeurs Dk et Dj parmi l'ensemble de valeurs de débit Di étant comparée à une valeur de consigne $\Delta$Dseuil prédéterminée, un signal d'alerte est engendré lorsque au moins un $\Delta$Dk,j devient supérieure à $\Delta$Dseuil indiquant un bouchage d'une des deux portions de canalisation micro fluidique. Dans le cas où un bouchage n'est pas détecté, la valeur moyenne du débit de liquide Dmoyen est calculée avec Dmoyen = $\Sigma$(Di)/(n-1) afin d'en déduire ultérieurement le débit instantané du fluide.

Selon une mise en œuvre de l'invention, on détermine le plus grand sous- ensemble de Di tel que deux quelconques débits de ce sous-ensemble Dk et Dj présentent une différence proportionnelle de débit $\Delta$Dk,j inférieure à $\Delta$Dseuil et que le débit moyen Dmoyen est alors calculé sur ce sous ensemble de débit.

Selon une mise en œuvre de l'invention, la valeur de débit moyen Dmoyen du débit de liquide est utilisée par un sous ensemble de contrôle d'un ordinateur spécialement configuré pour engendrer une consigne de pression P utilisable pour réguler le débit de liquide.

L'invention sera mieux comprise à l'aide des exemples de réalisation suivants, donnés à titre non limitatif, conjointement avec les figures qui la représentent dans le cas particulier de trois capteurs de pression et deux portions de canalisation (n=3):

[Fig. 1a] La figure 1a une illustration schématique du système et procédé selon l'invention;

[Fig. 1b] La figure 1b une représentation graphique de courbes de débit à l'intérieur de deux portions de canalisation de la figure 1a;

[Fig. 2] La figure 2 un schéma d'un exemple du système de débit micro fluidique selon l'invention;

[Fig. 3] La figure 3 un autre schéma de réalisation de l'invention.

Les éléments identiques, similaires, ou analogues conservent la même référence d'une figure à l'autre.

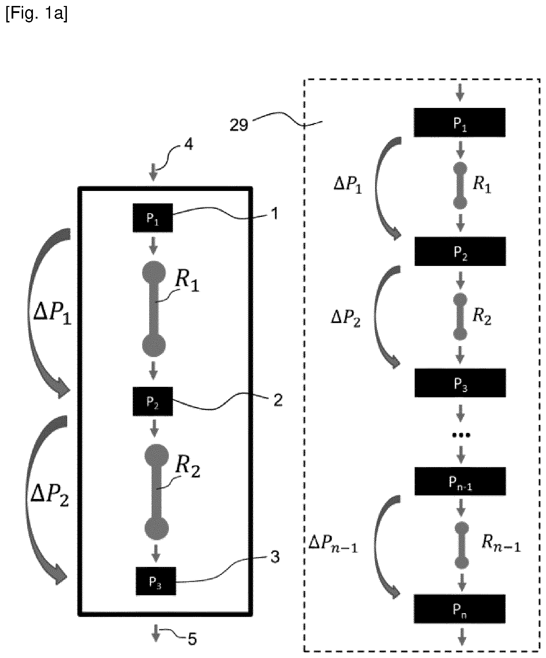

La figure 1a représente schématiquement un module illustrant le principe à la base du système et procédé selon l'invention. Sur cette figure un débit de liquide 4 est envoyé dans le canal micro fluidique R1 au travers du capteur de pression 1 placé à l'entrée de R1 puis récupéré à la sortie de R1 après avoir traversé le capteur de pression 2. Les canaux micro fluidiques R1 et R2 sont connectés en série, R2 étant relié à la sortie du capteur 2 de manière à récupérer le débit de liquide issu de R1 et le conduire jusqu'au capteur de pression 3 puis à la sortie du liquide 5. Dans ce mode de réalisation, les portions de canalisations R1, R2 sont ainsi réalisées à l'aide de canaux micro fluidiques.

A l'aide d'un ordinateur 10 spécialement configuré les différences de pressions $\Delta P1$ et $\Delta P2$ sont mesurées entre respectivement les deux extrémités des canaux micro fluidiques R1 et R2 ayant une extrémité commune au niveau du capteur 2 et utilisées pour calculer les valeurs de débit du fluide D1 et D2 dans les canaux R1 et R2, respectivement. Dans des circonstances normales, dans lesquelles aucun encrassement et/ou blocage des canaux micro fluidiques R1 et R2 ne s'est produit, les deux valeurs de débit du fluide D1 et D2 seront égales. Par contre s'il existe un blocage partiel et/ou un encrassement du dispositif, celui-ci produira une différence proportionnelle $\Delta D=|D2-D1|/((D2+D1)/2)$ entre les deux valeurs de débit du fluide calculées ($D1 \neq D2$) en raison du changement de résistance hydraulique effective du canal affecté, à partir de laquelle le débit du fluide est calculé. Cette différence proportionnelle $\Delta D$ sera calculée à l'aide d'un ordinateur 10 spécialement configuré pour calculer $\Delta P1$, $\Delta P2$, D1 et D2 à partir des mesures de pression issues des capteurs, puis comparer $\Delta D$ à une valeur de consigne $\Delta D$seuil, et engendrer un signal d'alarme (optique, électrique, mécanique etc...) qui sera exploité par l'utilisateur, de manière à permettre à celui-ci, s'il le souhaite, de nettoyer afin de mesurer avec plus d'exactitude le débit de liquide dans le circuit de canalisations micro fluidiques.

Bien entendu, il existe différentes formules possibles pour calculer la différence proportionnelle de débit qui sont à la portée de l'homme du métier, en particulier celle suivant laquelle la différence des débits Dk-Dj est divisée par la somme des débits uniquement ou plus généralement par X ou un 1/X fois la somme des débits (X étant un nombre entier).

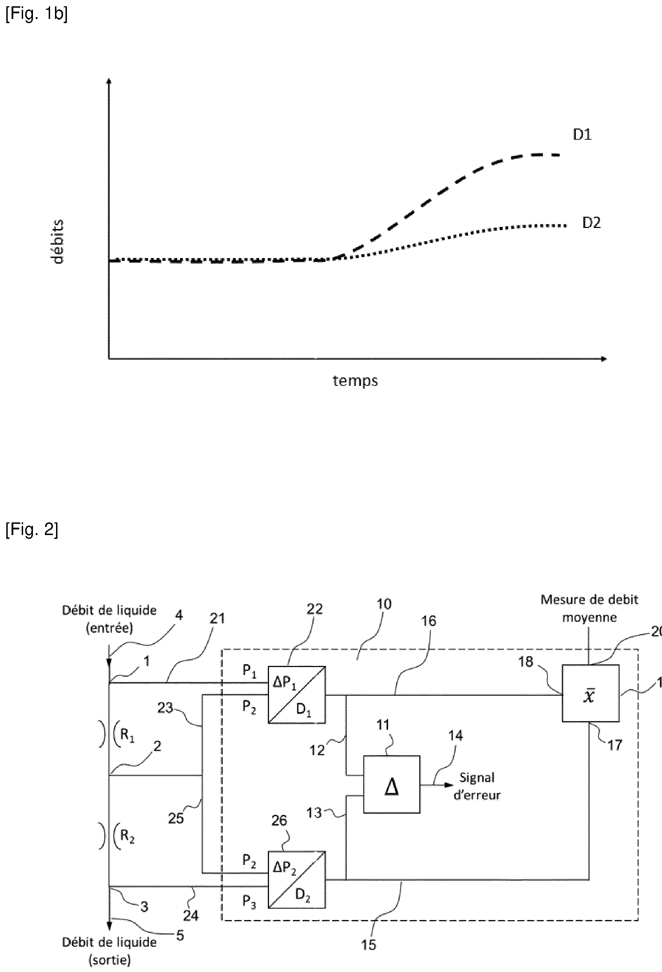

En effet, lorsqu'on injecte un liquide contenant des débris dans des portions de canalisations successives, les premières portions de canalisations en amont du flux de liquide tendent à se boucher plus rapidement que les portions de canalisation en aval du flux. Ce bouchage partiel des premières portions de la canalisation amène la résistance hydraulique Rhi des premières portions de canalisation à augmenter plus rapidement que celles situés en aval du flux. Ainsi, on peut voir dans la courbe des débits de la figure 1b qu'un encrassement de la portion R1 amène une augmentation virtuelle du débit D1 par rapport à D2 au cours du temps ce qui alerte l'utilisateur que la mesure de débit est probablement erronée. Cette invention permet donc à l'utilisateur de vérifier la cohérence des débits successifs mesurés dans les restrictions pour s'assurer qu'un colmatage ne s'opère pas dans le système au niveau d'une portion de canalisation.

Dans le cas où l'encrassement était dû au dépôt continu d'une couche de matériel sur les parois du canaux, il se peut néanmoins que les résistances hydrauliques varient de façon concomitante et donc que l'utilisateur ne soit pas en mesure de voir l'encrassement des canalisations en comparant la valeur des débits. Dans ce cas, il sera préférable d'utiliser des canaux ayant des diamètres hydrauliques différents. On entend par "diamètre hydraulique", le diamètre équivalent qu'aurait une canalisation circulaire présentant une perte de charge équivalente.

Comme la résistance hydraulique varie de façon non linéaire avec le diamètre hydraulique d'une canalisation, opter pour des canalisations avec des rayons hydrauliques différents permettra, en cas d'encrassement homogène des parois (réduction linéaire dans le temps du diamètre hydraulique), d'augmenter beaucoup plus rapidement la résistance hydraulique et donc le débit mesuré dans la canalisation présentant un diamètre hydraulique plus petit. En particulier, l'utilisation de deux canalisations dont une présentant un diamètre hydraulique au moins 2 fois plus faible qu'une autre permettra de distinguer un encrassement homogène constant dans le temps de façon certaine en provoquant une variation relative de résistance hydraulique au moins deux fois supérieure pour la canalisation de faible diamètre hydraulique par rapport à la canalisation de diamètre hydraulique supérieure. On détectera ainsi différence de débit de l'ordre de l'erreur provoquée par l'encrassement homogène. Dans le cas d'une application microfluidique, on pourra par exemple utiliser deux capillaires en série de diamètre internes respectif $50\mu M$ et $150\mu m$ ou encore deux micro-canaux de section rectangulaire, de hauteur constante, par exemple de $100\mu m$ et de largeurs respectives de $50\mu m$ et $200\mu m$ pour réaliser ces deux sections de canalisation de résistance hydraulique significativement différentes.

Si toutefois un encrassement équivalent venait à modifier de façon similaire les résistances hydrauliques dans plusieurs portions de canalisations, il sera alors préférable d'augmenter le nombre de ces portions de canalisations et des capteurs de pression. Ce schéma général est représenté dans la figure 1a par l'élément 29 avec n capteurs de pression et n-1 portions de canalisations disposées en série. En multipliant le nombre de débits mesurés pour chacune des n-1 portions, la probabilité d'avoir un encrassement équivalent concomitant est réduit et l'utilisateur bénéficiera donc d'un capteur de débit plus fiable encore.

Si la résistance hydraulique des n-1 portions de canalisation n'est pas connue, ou varie compte tenu du procédé de fabrication, il sera possible à l'opérateur d'effectuer une étape de calibration consistant à injecter un liquide propre (eau ultra-pure) à un débit connu (par exemple avec l'aide d'un pousse seringue) et de mesurer avec l'ordinateur la réponse des n capteurs de pressions pour en déduire la chute de pression et donc la résistance hydraulique de chacune des n-1 portions de canalisation. Ces résistances hydrauliques pourront ainsi être stockées dans la mémoire de l'ordinateur pour être utilisées lors de la mesure d'un débit inconnu. De même, si un capteur de débit a subi un bouchage partiel de l'une de ses canalisations, l'étape de calibrage initiale permettra de corriger les résistances du capteur de débit encrassé pour permettre une réutilisation ultérieure, par exemple après une étape de nettoyage. Cela permettra donc à l'utilisateur d'effectuer des économies substantielles en pouvant réutiliser un capteur ayant subi un encrassement partiel.

La figure 2 représente un exemple de réalisation du système de débit micro fluidique selon l'invention. Le débit de liquide micro fluidique 4 arrive sur le premier capteur de pression 1. Celui-ci délivre une mesure de la pression P1 via la connexion 21 à l'ordinateur 10 spécialement configuré pour mesurer avec le sous-ensemble 22 la différence de pression $\Delta P1$ entre la pression P1 et la pression P2 mesurée à l'aide du capteur de pression 2 à la sortie de la canalisation micro fluidique R1 puis calculer le débit du fluide D1 dans la canalisation R1, transmise à l'ordinateur 10 par la connexion 23. Le sous ensemble 22 transmet la valeur D1 par la connexion 12 au sous ensemble détecteur de bouchage 11.

Le liquide micro fluidique issu de R1 au niveau du capteur 2 s'écoule ensuite dans la canalisation micro fluidique R2 jusqu'au troisième capteur de pression 3 et la sortie du débit de liquide 5. Le capteur de pression 3 via la connexion 24 délivre un signal de pression P3 au sous ensemble 26 semblable au sous ensemble 22 tandis que le capteur 2 est également relié par la connexion 25 au sous ensemble 26 auquel elle délivre également un signal de pression P2, le sous ensemble 26 transmettant la valeur D2 par la connexion 13 au sous ensemble détecteur de bouchage 11, qui calcule la différence proportionnelle des valeurs de débit $\Delta D$ (à partir de D1 et D2) et la compare avec $\Delta Dseuil$.

L'ordinateur est alors en mesure d'émettre un signal d'alerte 14 à l'opérateur en cas de dépassement de ce seuil maximal. Cette alerte permet notamment de ne pas laisser à l'opérateur l'initiative d'apprécier le moment où les débits sont trop différents et rend plus robuste l'utilisation de ce type de capteur, notamment dans des lignes de productions. L'ordinateur pourra aussi réaliser toute forme de traitement et d'analyse des signaux (moyennage, intégrale, dérivée) pour détecter une dérive sous le seuil d'alerte mais permettant de prévenir une erreur future et déclencher une maintenance préventive sur le capteur de débit.

La valeur D2 est également envoyée par la connexion 15 à l'entrée 17 du sous ensemble 19 qui reçoit également sur son entrée 18 la valeur D1 par la connexion 16, l'ordinateur 10 grâce à son sous ensemble 19 effectuant la moyenne des amplitudes de D1 et D2 et délivrant en sortie 20 une mesure de débit moyen du liquide micro fluidique, plus précis que D1 et D2 : c'est aussi un des avantages de l'invention pour laquelle les valeurs D1 et D2 ont une double fonction de détection d'un bouchage de canalisation et de mesure d'un débit moyen. Il est à noter aussi que l'opérateur pourra préférer configurer l'alerte au niveau de l'ordinateur pour que celle-ci se déclenche quand la valeur absolue de la différence de débit est supérieure à un seuil absolu par exemple de $1\mu L/min$ pour un capteur devant opérer sur une gamme allant de 0 à $100\mu L/min$.

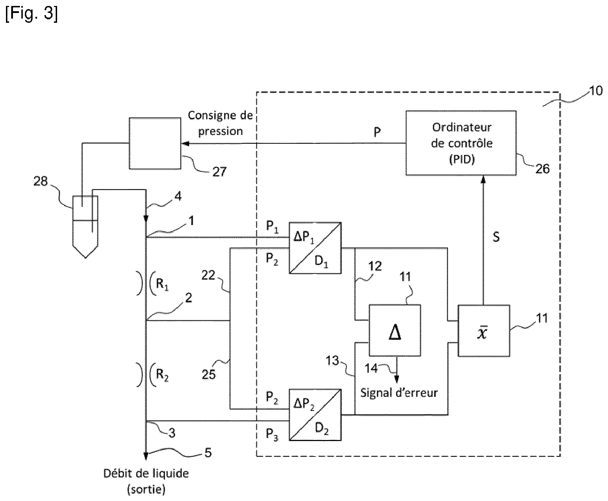

La figure 3 montre un exemple de réalisation de l'invention dans lequel on utilise les mesures de variations de pression $\Delta P1$ et $\Delta P2$, d'où les variations de débit du fluide D1 et D2, pour engendrer un signal S représentant le débit moyen dans la canalisation micro fluidique dans le cas où un bouchage n'est pas détecté par le sous ensemble détecteur de bouchage 11. Ce signal S est utilisé par un dispositif de contrôle 26 (sous ensemble de l'ordinateur 10) de type PID (pour Proportionnel-Intégral-Dérivé) pour engendrer un signal de consigne P de pression à un contrôleur de pression 27 (par exemple le contrôleur Elveflow OB1) qui va piloter la pression du ciel gazeux dans le réservoir 28 de liquide injecté dans la canalisation micro fluidique 4, permettant ainsi de contrôler le débit du liquide micro fluidique.

La mesure S du capteur de débit peut ainsi être utilisée pour lire rapidement le débit de liquide à un instant donné et être entrée dans une boucle d'asservissement PID afin d'ajuster la pression de pompage appliquée dans le réservoir 28, et ainsi contrôler le débit dans le système micro fluidique.

De préférence, le détecteur de pression à l'extrémité aval d'une portion de canalisation Ri est le même que le détecteur de pression placé à l'entrée de la portion de canalisation successive Ri+1, c'est-à-dire, il existe de préférence un seul capteur de pression entre deux portions de résistances hydrauliques successives.

L'invention fonctionne avec la lecture en continu des capteurs de pression intégrés et le calcul à l'aide d'un ordinateur spécialement configuré des valeurs ΔPi et Di.

Avant que la moyenne des valeurs Di ne soit réalisée, la différence entre elles est calculée. Si la différence proportionnelle ΔDk,j entre deux quelconques valeurs Dk et Dj de débit parmi l'ensemble des valeurs Di est supérieure à ΔDseuil (par exemple, 2 %), il est probable qu'un encrassement ou un blocage du chemin d'écoulement du micro-canal soit présent. Ce seuil est déterminé par l'erreur cumulée des capteurs de pression successifs (ex : exactitude de mesure $\pm 0,2$ %), dont les signaux constituent le calcul d'un ΔPi et d'un Di, en plus de toute incertitude liée aux dimensions des micro-canaux intégrés (ex : une tolérance dimensionnelle de $\pm 0,5$ % du micro-usinage, car l'exactitude du calcul de débit dépend également de l'exactitude des dimensions des micro-canaux). Dans les cas où la différence maximale entre valeurs de débit fluidique ΔD dépasse ce seuil, par exemple une lumière LED à l'extérieur du capteur s'allumera (commandée par l'ordinateur spécialement configuré) pour indiquer le blocage probable à l'utilisateur. De préférence l'ordinateur spécialement configuré émettra un message d'avertissement suggérant à l'utilisateur d'effectuer un protocole de nettoyage du capteur pour résoudre le problème d'encrassement.

Ces opérations arithmétiques (pour déterminer les valeurs ΔPi, Di, ΔDk,j et Dmoyen) seront effectuées plusieurs fois par seconde par l'ordinateur spécialement configuré et ensuite communiquées à une interface logicielle de contrôle et d'enregistrement des données (non représentée sur les figures).

**Revendications**

1. Système de mesure de débit dans une canalisation micro fluidique comportant n capteurs de pression Ci (C1, C2, ..., Cn), avec n supérieur ou égal à 3, disposés en série sur la canalisation et mesurant la pression du liquide les traversant, ces capteurs étant séparés entre eux par n-1 portions de canalisation Ri (R1, R2, ..., Rn-1) présentant chacune une résistance hydraulique Rhi (Rh1, Rh2, ..., Rhn-1), les capteurs de pression mesurant la pression Pi (P1, P2, ..., Pn) du liquide les traversant respectivement, ainsi qu'un ordinateur (10) spécialement configuré pour :

   - mesurer les variations de pression ou pertes de charge ΔPi (ΔP1, ΔP2, ..., ΔPn-1) entre deux capteurs de pression Ci et Ci+1 successifs,
   - **caractérisé en ce que** l'ordinateur est configuré pour calculer le débit de liquide Di (D1, D2, ..., Dn-1) dans chaque portion de canalisation Ri selon la relation : Di= ΔPi/Rhi, et
   - calculer la différence proportionnelle de débit ΔDk,j entre deux valeurs Dk et Dj parmi les valeurs de débit Di selon la relation :

$$\Delta Dk,j = \frac{|Dk - Dj|}{\frac{Dk + Dj}{2}}$$

   - l'ordinateur (10) comprenant des moyens de détections de bouchage (11) pour engendrer un signal d'alerte (14) lorsqu'une différence proportionnelle ΔDk,j entre deux quelconques valeurs Dk et Dj parmi l'ensemble des valeurs Di est supérieure à une valeur de seuil ΔDseuil, ce signal indiquant un bouchage partiel et / ou un encrassement de la canalisation micro fluidique.

2. Système selon la revendication 1, **caractérisé en ce que** l'ordinateur spécialement configuré (10) est apte à calculer la moyenne des débits Dmoyen des valeurs de débits Di.

3. Système selon la revendication 1, **caractérisé en ce que** l'ordinateur spécialement configuré (10) est apte à calculer la moyenne de débits Dmoyen sur le plus grand ensemble des Di tel que deux quelconques débits Dj et Dk de cet ensemble présentent une différence proportionnelle de débit ΔDk,j inférieure à ΔDseuil.

4. Système selon l'une des revendications 1 à 3, **caractérisé en ce qu'**au moins une des portions de canalisation Ri a un diamètre hydraulique différent de celui des autres portions de canalisations.

5. Système selon la revendication 4, **caractérisé en ce que** deux portions de canalisation Ri présentent un rapport de diamètre hydraulique supérieur ou égal à 2.

6. Procédé pour mesurer le bouchage d'une canalisation micro fluidique consistant à faire circuler le fluide au travers de n-1, avec n supérieure ou égale à 3, portions de canalisation micro fluidiques Ri, disposées en série présentant chacune une résistance hydraulique (Rhi) respectivement, un capteur de pression Ci étant disposé respectivement aux deux extrémités de chaque portion de canalisation micro fluidique configurées en série de manière à mesurer les variations de pression ΔPi entre les deux capteurs de pression disposés aux deux extrémités de la i-ème portion de canalisation micro fluidique Ri, **caractérisé en ce que** le procédé comprend ensuite calculer le débit Di dans chaque portion de canalisation selon la relation :

$$Di = \Delta Pi / Rhi$$

ainsi que les différences proportionnelles de débit ΔDk,j, selon la relation :

$$\Delta Dk, j = |Dk - Dj| / ((Dk + Dj)/2)$$

ledit procédé étant en mesure de calculer la valeur moyenne des débits Dmoyen selon la relation :

$$Dmoyen = \sum(Di)/(n - 1)$$

la différence proportionnelle ΔDk,j entre deux quelconques valeurs Dk et Dj parmi l'ensemble de valeurs de débit Di étant comparée à une valeur de consigne ΔDseuil prédéterminée, un signal d'alerte est engendré lorsque au moins un ΔDk,j devient supérieure à ΔDseuil indiquant un bouchage d'une des deux portions de canalisation micro fluidique.

7.  Procédé selon la revendication 6, **caractérisé en ce que** l'on détermine le plus grand sous ensemble de Di tel que deux quelconques débits de ce sous-ensemble Dk et Dj présentent une différence proportionnelle de débit ΔDk,j inférieure à ΔDseuil et que le débit moyen Dmoyen est alors calculé sur ce sous ensemble de débit.

8.  Procédé selon la revendication 6 ou 7, **caractérisé en ce que** la valeur de débit moyen Dmoyen du débit de liquide est utilisée par un sous ensemble de contrôle (26) d'un ordinateur (10) spécialement configuré pour engendrer une consigne de pression P utilisable pour réguler le débit de liquide.

**Patentansprüche**

1.  System zur Messung eines Durchflusses in einem mikrofluidischen Rohr, mit n Drucksensoren Ci (C1, C2, ..., Cn), wobei n größer oder gleich 3 ist, welche in Reihe auf dem Rohr angeordnet sind und den Druck der durchfließenden Flüssigkeit messen, wobei diese Sensoren durch n-1 Rohrabschnitte Ri (R1, R2, ..., Rn-1) voneinander getrennt sind, die jeweils einen hydraulischen Widerstand Rhi (Rh1, Rh2, ..., Rhn-1) aufweisen, wobei die Drucksensoren jeweils den Druck Pi (P1, P2, ..., Pn) der durchfließenden Flüssigkeit messen, sowie einem Computer (10), der speziell konfiguriert:

    - zum Messen von Druckschwankungen oder Druckverlusten ΔPi (ΔP1, ΔP2, ..., ΔPn-1) zwischen zwei aufeinanderfolgenden Drucksensoren Ci und Ci+1,
    - **dadurch gekennzeichnet, dass** der Computer konfiguriert ist:
    - zum Berechne des Flüssigkeitsdurchflusses Di (D1, D2, ..., Dn-1) in jedem Rohrabschnitt Ri gemäß der Beziehung: Di = ΔPi/Rhi, und
    - zum Berechnen der proportionalen Durchflussratendifferenz ΔDk,j zwischen zwei Werten Dk und Dj unter den Durchflussraten Di gemäß der Beziehung:

$$\Delta Dk, j = \frac{|Dk - Dj|}{\frac{Dk + Dj}{2}}$$

    - wobei der Computer (10) Mittel zum Erkennen von Verstopfung (11) durch Erzeugen eines Warnsignals (14) umfasst, wenn eine proportionale Differenz ΔDk,j zwischen zwei beliebigen Werten Dk und Dj aus der Menge der Werte Di größer als ein Schwellenwert ΔDseuil ist, wobei dieses Signal eine teilweise Verstopfung und/oder eine Verschmutzung des mikrofluidischen Rohrs anzeigt.

2.  System nach Anspruch 1, **dadurch gekennzeichnet, dass** der speziell konfigurierte Computer (10) in der Lage ist, die mittleren Durchflussraten Dmoyen aus den Durchflussratenwerten Di zu berechnen.

3.  System nach Anspruch 1, **dadurch gekennzeichnet, dass** der speziell konfigurierte Computer (10) in der Lage ist, den Mittelwert der Durchflussrate Dmoyen über die größte Menge von Di zu berechnen, so dass je zwei Durchflussraten Dj und Dk dieser Menge eine proportionale Durchflussratendifferenz ΔDk,j kleiner als ΔDseuil aufweisen.

4.  System nach einem der Ansprüche 1 bis 3, **dadurch gekennzeichnet, dass** mindestens ein Rohrabschnitt Ri einen anderen hydraulischen Durchmesser als die übrigen Rohrabschnitte aufweist.

5.  System nach Anspruch 4, **dadurch gekennzeichnet, dass** zwei Rohrabschnitte Ri ein hydraulisches Durchmesserverhältnis, das grösser oder gleich 2 ist, aufweisen.

6.  Verfahren zur Messung der Verstopfung eines mikrofluidischen Rohres, indem es darin besteht, die Flüssigkeit durch n-1 in Reihe geschaltete mikrofluidische Rohrabschnitte Ri, wobei n größer oder gleich 3 ist, welche jeweils einen hydraulischen Widerstand (Rhi) aufweisen, zu zirkulieren,

    wobei ein Drucksensor Ci jeweils an den beiden Enden jedes in Reihe geschalteten mikrofluidischen Rohrabschnitts angeordnet ist, um die Druckänderungen ΔPi zwischen den beiden Drucksensoren an den beiden Enden des i-ten mikrofluidischen Rohrabschnitts Ri zu messen, **dadurch gekennzeichnet, dass** das Verfahren anschließend die Berechnung der Durchflussrate Di in jedem Rohrabschnitt gemäß der folgenden Beziehung:

    $$Di = \Delta Pi/Rhi$$

    sowie der proportionalen Durchflussdifferenzen ΔDk,j gemäß der Beziehung:

    $$\Delta Dk,j = |Dk-Dj|/(Dk+Dj)/2)$$

    umfasst, wobei das genannte Verfahren in der Lage ist, den mittleren Durchflusswert Dmoyen gemäß folgender Beziehung:

    $$Dmoyen = \sum(Di)/(n-1)$$

    zu berechnen, wobei die proportionale Differenz ΔDk,j zwischen zwei beliebigen Werten Dk und Dj aus der Menge der Durchflussratenwerte Di mit einem vorgegebenen Sollwert ΔDseuil verglichen wird, wobei ein Warnsignal erzeugt wird, wenn mindestens ein ΔDk,j größer als ΔDseuil wird, was auf eine Verstopfung eines der beiden mikrofluidischen Rohrabschnitte hinweist.

7.  Verfahren nach Anspruch 6, **dadurch gekennzeichnet, dass** die größte Teilmenge von Di so bestimmt wird, dass je zwei Durchflussraten dieser Teilmenge Dk und Dj eine proportionale Durchflussratendifferenz ΔDk,j kleiner als ΔDseuil aufweisen, und anschließend die mittlere Durchflussrate Dmoyen über diese Durchflussraten-Teilmenge berechnet wird.

8.  Verfahren nach Anspruch 6 oder 7, **dadurch gekennzeichnet, dass** der mittlere Durchflusswert Dmean der Flüssigkeitsdurchflussrate von einer Steuereinheit (26) eines zum Erzeugen eines zur Regelung der Flüssigkeitsdurchflussrate verwendbaren Druck-Sollwerts P speziell konfigurierten Computers (10) verwendet wird.

**Claims**

1.  A system for measuring a flow rate in a microfluidic pipe comprising n pressure sensors Ci (C1, C2,... Cn), with n greater than or equal to 3, arranged in series on the pipe and measuring the pressure of the liquid flowing therethrough, these sensors being separated from each other by n-1 pipe portions Ri (R1, R2, ..., Rn-1), each of them having a hydraulic resistance Rhi (Rh1, Rh2, ..., Rhn-1), the pressure sensors measuring the pressure Pi (P1, P2, ..., Pn) of the liquid flowing therethrough respectively, as well as a computer (10) specially configured for:

    - measuring pressure variations or load losses ΔPi (ΔP1, ΔP2, ..., ΔPn-1) between two successive pressure sensors Ci and Ci+1,
- **characterized in that** the computer is configured for
- calculating the liquid flow rate Di (D1, D2, ..., Dn-1) in each pipe portion Ri according to the relation: Di = ΔPi/Rhi, and
- calculating the proportional difference in flow rate ΔDkj between two values Dk and Dj among the flow rate values Di according to the relation:

$$\Delta Dk, j = \frac{|Dk - Dj|}{\dfrac{Dk + Dj}{2}}$$

- the computer (10) comprising means for detecting blockages (11) by generating an alert signal (14) when a proportional difference ΔDk,j between any two values Dk and Dj among the set of values Di is greater than a threshold value ΔDseuil, this signal indicating a partial blockage and/or a clogging of the microfluidic pipe.

2. The system according to claim 1, **characterized in that** the specially configured computer (10) is capable of calculating the flow rates average Dmoyen of the flow rate values Di.

3. The system according to claim 1, **characterized in that** the specially configured computer (10) is capable of calculating the flow rate average Dmoyen over the largest set of Di such that any two flow rates Dj and Dk of this set have a proportional flow rate difference ΔDk,j less than ΔDseuil.

4. The system according to any one of the claims 1 to 3, **characterized in that** at least one of the pipe portions Ri has a hydraulic diameter different from that of the other pipe portions.

5. The system according to claim 4, **characterized in that** two pipe portions Ri have a hydraulic diameter ratio greater than or equal to 2.

6. A method for measuring the blockage of a microfluidic pipe consisting in circulating the fluid through n-1, with n greater than or equal to 3, microfluidic pipe portions Ri, arranged in series, each of them having a hydraulic resistance (Rhi) respectively,

   a pressure sensor Ci being arranged respectively at the two ends of each microfluidic pipe portion configured in series so as to measure the pressure variations ΔPi between the two pressure sensors at the two ends of the i-th microfluidic pipe portion Ri, **characterized in that** the method then comprises calculating the flow rate Di in each pipe portion according to the relation:

$$Di\ =\ \Delta Pi/Rhi$$

   as well as the proportional flow rate differences ΔDk,j, according to the relation:

$$\Delta Dk,j\ =\ |Dk-Dj|/(Dk+Dj)/2)$$

   said method being capable of calculating the average flow rate value Dmoyen according to the relation:

$$Dmoyen\ =\ \sum (Di)/(n-1)$$

   the proportional difference ΔDk,j between any two values Dk and Dj among the set of flow rate values Di being compared to a predetermined set value ΔDseuil, an alert signal being generated when at least one ΔDk,j becomes greater than ΔDseuil, indicating thereby a blockage of one of the two microfluidic pipe portions.

7. The method according to claim 6, **characterized in that** the largest subset of Di is determined such that any two flow rates of this subset Dk and Dj have a proportional flow rate difference ΔDk,j less than ΔDseuil and the average flow rate Dmoyen is then calculated over this flow rate subset.

8. The method according to claim 6 or 7, **characterized in that** the average flow value Dmean of the liquid flow rate is used by a control subset (26) of a computer (10) specially configured for generating a pressure set value P usable to regulate the liquid flow rate.

[Fig. 1a]

[Fig. 1b]

[Fig. 2]

[Fig. 3]

**RÉFÉRENCES CITÉES DANS LA DESCRIPTION**

**Documents brevets cités dans la description**

- WO 2017125499 A
- US 5515735 A
- US 8403908 B
- WO 9740350 A
- US 2014208833 A1

**Littérature non-brevet citée dans la description**

- **N.T. NGUYEN**. micromachined flow sensors-a review. *FLOW MEASUREMENT AND INSTRUMENTATION-MARCH*, 1997